Europäisches Patentamt

(19) European Patent Office

Office européen des brevets

(11) Publication number : **0 516 352 A2**

## (12) EUROPEAN PATENT APPLICATION

(21) Application number : 92304657.7

(22) Date of filing : 22.05.92

(51) Int. Cl.⁵ : **G03G 15/22**

(30) Priority : **22.05.91 JP 146746/91**

(43) Date of publication of application :
**02.12.92 Bulletin 92/49**

(84) Designated Contracting States :
**DE FR GB**

(71) Applicant : **VICTOR COMPANY OF JAPAN, LTD.**
**12, Moriya-Cho 3-Chome, Kanagawa-Ku**
**Yokohama-Shi, Kanagawa-Ken (JP)**

(72) Inventor : **Takanashi, Itsuo**
**3-7-12, Oomachi**
**Kamakura-Shi, Kanagawa-Ken (JP)**

Inventor : **Nakagaki, Shintaro**
**6-2, Koyo-Cho**
**Miura-Shi, Kanagawa-Ken (JP)**
Inventor : **Asakura, Tsutou**
**21, Shantemeru, 345-71, Shiba-Machi, Kanazawa-Ku**
**Yokohama-Shi, Kanagawa-Ken (JP)**
Inventor : **Furuya, Masato, 203, Nanryo Mutsuura Bldg.**
**1538-95, Mutsuura-Cho, Kanazawa-Ku**
**Yokohama-Shi, Kanagawa-Ken (JP)**
Inventor : **Koyama, Yoshihisa**
**3091-1, Nagasawa**
**Yokosuka-Shi, Kanagawa-Ken (JP)**
Inventor : **Uchiyama, Yuji**
**7-2-5-503, Akamatsu-Cho**
**Chigasaki-Shi, Kanagawa-Ken (JP)**

(74) Representative : **Crawford, Andrew Birkby et al**
**A.A. THORNTON & CO. Northumberland House 303-306 High Holborn**
**London WC1V 7LE (GB)**

(54) **Apparatus and method of successively recording information carried by electro-magnetic radiation beam.**

(57) An apparatus for recording information carried by an electro-magnetic radiation beam. The apparatus has a recording unit having two electrodes (14 and 24), one of the electrodes being earthed, a photoconductive member (26) and a recording member (16) capable of holding electric charges, the members being arranged so as to face each other between the electrodes. An electro-magnetic radiation beam carrying information to be recorded is directed to the photoconductive member (26) under presence of a voltage across the electrodes. Conductivity of the photoconductive member (26) then varies according to the information so that electric charges are generated in the photoconductive member (26). An electric field is then generated and is applied to the recording member (16). Thus, an electric charge image corresponding to the information is formed on the recording member (16). An electro-magnetic radiation beam is directed to the photoconductive member (26) to increase the conductivity thereof so that the electric charges generated in the photoconductive member (26) flow to the ground via the earthed electrode.

FIG. 2

EP 0 516 352 A2

## BACKGROUND OF THE INVENTION

The present invention relates to an apparatus and a method of performing information recording using light (including various types of electro-magnetic radiation beams) with respect to a recording medium which stores information, and in particular, to a recording apparatus that performs successive recording and the method thereof.

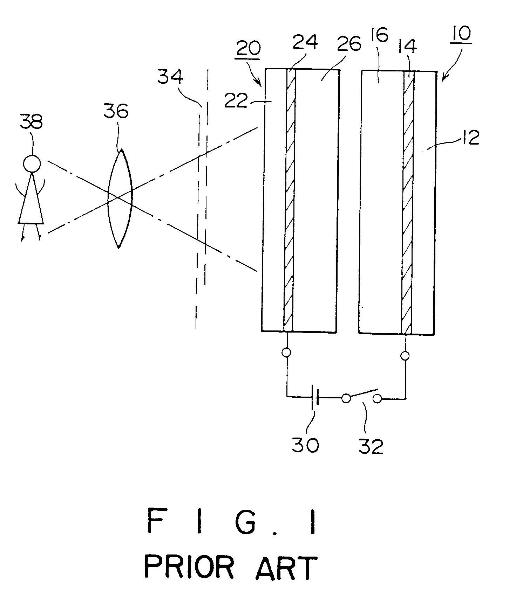

FIG. 1 is a view of a conventional recording apparatus that stores information with respect to a recording medium. In FIG. 1, a recording medium 10 is configured with a recording member 16 laminated onto a transparent substrate 12 via a transparent electrode 14. A write head 20 is configured with a photoconductive member 26 laminated onto a transparent substrate 22 via a transparent electrode 24. The write head 20 and the recording medium 10 are then arranged so that the photoconductive member 26 is opposite the recording member 16.

Between the transparent electrodes 14 and 24 there is a drive power source 30 connected via a switch 32. To the side of the transparent substrate 22 of the write head 20 there are arranged an optical shutter 34 and a taking lens 36.

Glass substrates for example, are used as the transparent substrates 12 and 22. In addition ITO (indium-tin oxide) for example, is used as the transparent electrodes 14 and 24. At least the transparent substrate 22 and the transparent electrode 24 are made of materials which are transparent with respect to the wavelength band of the light for information recording.

The recording member 16 is capable of having a charge image formed on its surface for a long time in accordance with an impressed electric field and of photomodulation according to the charge image. For example, it is possible to apply silicone resin, liquid crystal, lead lanthanum zirconate titanate, an electrochromic material or the like to the recording member 16. A polymer-dispersed liquid crystal memory is also applicable to the recording member 16. The photoconductive member 26 is made of a photoconductive material such as a-Si or the like so that a charge image corresponding to information is formed when light carrying the information to be recorded is irradiated to the photoconductive member 26.

A control means not shown in the figure switches the switch 32 from its off to on state, and a voltage of the drive power source 30 is impressed across the transparent electrodes 14 and 24. When the optical shutter 34 opens, an image information of an object 38 is irradiated to the photoconductive member 26 of the write head 20 via the taking lens 36 and the optical shutter 34. Because of this, the photoconductive member 26 exhibits conductivity distribution corresponding to the intensity of the irradiated light.

When this occurs, the drive voltage which is impressed across the transparent electrodes 14 and 24 is fractionally and variably impressed to the recording member 16 in accordance with the conductivity distribution of the photoconductive member 26. A charge image corresponding to the image information of the object 38 is thus formed on the surface of the recording member 16. By this, the image information of the object 38 is recorded as the variation of optical transmittivity on the recording member 16 if including liquid crystals.

The recording medium 10 is in the form of 35mm photographic film for example, and after recording, is fed frame by frame by a feed means not shown in the figure.

However, in a recording apparatus such as described above, when the recording medium is fed frame by frame and successive recording is performed, the following problems occur when a recording interval is short. Among electric charges generated in the photoconductive member 26 during recording, the electric charges held at deep levels do not disappear in a short time. Because of this, those electric charges remain in the photoconductive member 26 until the next recording operation and they are superposed with electric charges generated at the time of next recording operation. The result is that information recorded the previous time overlaps the information recorded to current time.

## SUMMARY OF THE INVENTION

In the light of this problem, the present invention has as an object the provision of a recording apparatus which can favorably perform successive recording operation in a short time and the method thereof.

To achieve the above object, the present invention provides an apparatus for recording information carried by an electro-magnetic radiation beam, the apparatus comprising: a recording unit comprising two electrodes, one of the electrodes being connected to the ground, a photoconductive member and a recording member capable of holding electric charges, the members being arranged so as to face each other between the electrodes; means for applying a specific voltage across the electrodes; means for directing an electro-magnetic radiation beam modulated with information to be recorded to the photoconductive member under presence of the voltage to make conductivity of the photoconductive member vary according to the information so that electric charges are generated in the photoconductive member, the electric charges causing generation of an electric field which is applied to the recording member, thus an electric charge image corresponding to the information being formed on the recording member; and means for directing an unmodulated electro-magnetic radiation beam to the photoconductive member to increase the conductivity thereof so that the electric charges generated in the photoconductive member flow to the ground via the electrode connected to the ground.

The present invention also provides an apparatus for successively recording information carried by electro-magnetic radiation beams, the apparatus comprising: a recording unit comprising two electrodes, one of the electrodes being connected to the grounded, a photoconductive member and a recording member capable of holding electric charges, the members being arranged so as to face each other between the electrodes; means for applying a specific voltage across the electrodes; means for successively directing electro-magnetic radiation beams modulated with information to be recorded to the photoconductive member under presence of the voltage, each of the beams making conductivity of the photoconductive member vary according to the information so that electric charges are generated in the photoconductive member, the electric charges causing generation of an electric field which is applied to the recording member, thus electric charge images corresponding to the information being successively formed on the recording member; means for successively directing unmodulated electro-magnetic radiation beams to the photoconductive member to increase the conductivity thereof so that each of the electric charges generated in the photoconductive member flow to the ground via the electrode connected to the ground; and means for controlling an interval between successive directing of the unmodulated electro-magnetic radiation beams to the photoconductive member so that one of the unmodulated electro-magnetic radiation beams is directed to the photoconductive member after one of the electric charge images is formed on the recording member and before another electric charge image which follows the one formed image is formed on the recording member.

The present invention further provides a method of successively recording information carried by electro-magnetic radiation beams, the method comprising the steps of: providing two electrodes, one of the electrodes being connected to the ground, a photoconductive member and a recording member capable of holding electric charges; arranging the members so as to face each other between the electrodes; applying a specific voltage across the electrodes; directing successively electro-magnetic radiation beams modulated with information to be recorded to the photoconductive member under presence of the voltage, each of the beams making conductivity of the photoconductive member vary according to the information so that electric charges are generated in the photoconductive member, the electric charges causing generation of an electric field which is applied to the recording member, thus electric charge images corresponding to the information being successively formed on the recording member; directing successively unmodulated electro-magnetic radiation beams to the photoconductive member to increase the conductivity thereof so that each of the electric charges generated in the photoconductive member flow to the ground via the electrode connected to the ground; and controlling an interval between successive directing of the unmodulated electro-magnetic radiation beams to the photoconductive member so that one of the unmodulated electro-magnetic radiation beams is directed to the photoconductive member after one of the electric charge images is formed on the recording member and before another electric charge image which follows the one formed image is formed on the recording member.

BRIEF DESCRIPTION OF THE DRAWINGS

FIG. 1 is a view describing a conventional recording apparatus;
FIG. 2 is a view describing embodiments of the recording apparatus of the present invention; and
FIG. 3 is a time chart describing the operation of the embodiments.

DETAILED DESCRIPTION OF THE PREFERRED EMBODIMENT

The following is a description of preferred embodiments of the present invention, with reference to the appended drawings. Moreover, those portions of the configuration which correspond to portions of the conventional apparatus, are indicated with corresponding numerals.

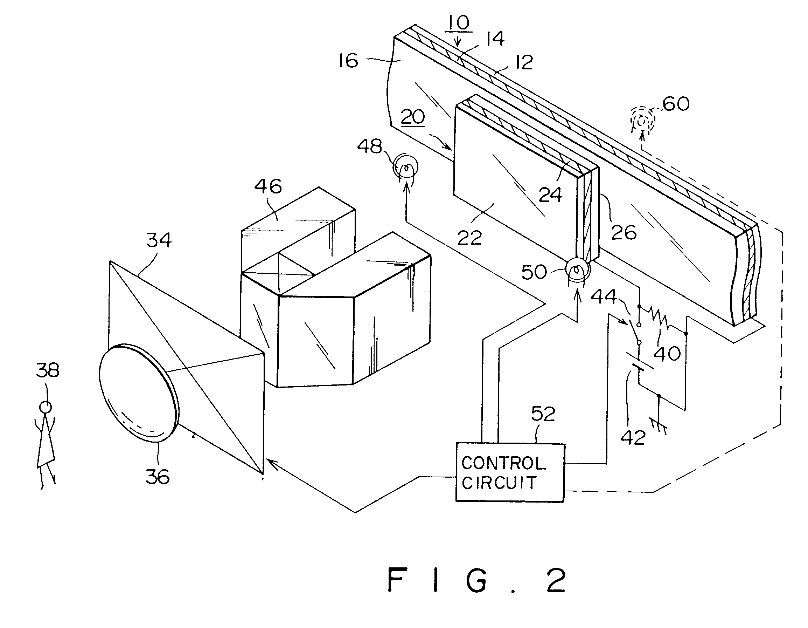

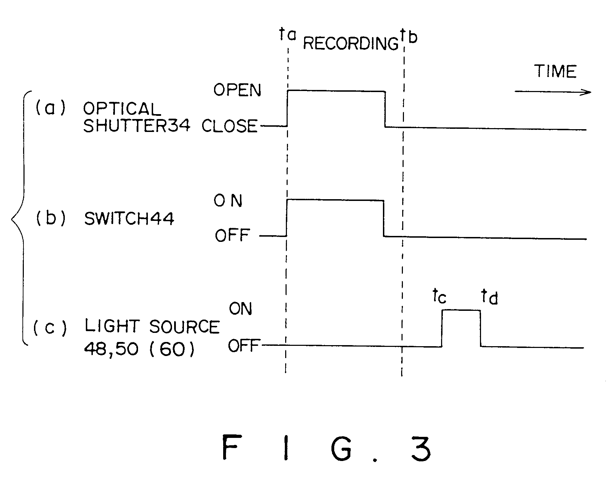

A first preferred embodiment will be explained with reference to FIGS. 2 and 3. The portion indicated by dotted lines in FIG. 2 is provided only in a second embodiment explained later.

In FIG. 2, the recording medium 10 and the write head 20 are configured in the same manner as described above. Here, the recording medium 10 is formed in a sheet shape. The recording medium 10 and the write head 20 are arranged so that the photoconductive member 26 is opposite the recording member 16.

A resistor 40 is connected across the electrode 14 and the transparent electrode 24 and to both ends of this resistor is connected a series circuit of a drive power source 42 and a switch 44. The negative side of the power source 42 is earthed.

A three-color separation optical system 46 is provided opposite the transparent substrate 22 of the write head 20. This optical system 46, described in Japanese Patent Laid-Open No. 2(1990)-54425, separates an incident light from an object 38 into light components of primary colors of red, green and blue and emits the light components carrying primary color images.

An optical shutter 34 and a taking lens 36 are provided on the light illumination side of the optical system 46.

Light sources 48 and 50 are so provided between the write head 20 and the optical system 46 that the light sources 48 and 50 do not interfere with optical paths from the optical system 46 to the write head 20.

There is further provided a control circuit 52 which controls the optical shutter 34, switch 44 and light sources 48 and 50.

The resistor 40 has a relatively low resistance value and discharges electric charges taken in a capacitor formed between the recording medium 10 and write head 20. This prevents information recorded in the recording medium 10 from varying and the resolution of the information from lowering owing to the electric charges.

The voltage of the power source 42 is so determined that a voltage higher than a discharge start voltage at which electric discharge starts to occur between the recording member 16 and the photoconductive member 26 is empressed thereacross.

The light sources 48 and 50 are for performing the irradiation of light to the write head 20 so as to release and extinguish the electric charges which remain stored at deep levels in the photoconductive member 26 of the write head 20 after recording operation.

The following is a description of the operation of the first embodiment having the configuration described above, with reference to FIG. 3. As shown in this figure, the recording operation of the object 38 starts at time $t_a$. In the example shown in the figure, the control circuit 52 causes the start operation of the optical shutter 34 and the ON operation of the switch 44 to occur at the same time (Refer to FIG. 3(a) and (b)).

Because of this, the light from the object 38 is irradiated to the three-color separation optical system 46 via the taking lens 36 and the optical shutter 34, to be subjected to color separation. Optical images of primary colors are thus formed and are irradiated to the write head 20, so that the conductivity of the photoconductive member 26 varies to correspond to the intensity distribution of the optical images. By this, electric fields corresponding to the optical images are impressed to the recording member 16 to form charge images. Thus, each of the images of the three primary colors of the object 38 are respectively recorded to the recording member 16.

After the time $t_b$ when the recording operation ends, the light sources 48 and 50 are driven by the control circuit 52 to light at time $t_c$ and unmodulated light is irradiated to the photoconductive member 26 of the write head 20 (Refer to FIG. 3(c)). When this occurs, the conductivity of the photoconductive member 26 rises and the electric charges that have been trapped in deep levels of the photoconductive member 26 escape to the ground via the electrode 24 and the resistor 40. In addition, the residual charges on the surface of the photoconductive member 26 are also disappeared. Accordingly, the influence on the following recording operation is favorably reduced. The lighting of the light sources 48 and 50 ends at time $t_d$.

The control circuit 52 can have any configuration as long as it performs control at the timing described above.

After this operation, the recording medium 10 is shifted and recording of the next information is performed to a portion which has not been recorded to, and the operation described above is repeated.

The following is a description of a second embodiment. In this embodiment, as shown by the dotted line in FIG. 2, there is provided the light source 60 instead of the light sources 48 and 50 of the first embodiment. Then, the substrate 12 and the electrode 14 of the recording medium 10 are both formed so as to be transparent. In this embodiment, the irradiation of light with respect to the photoconductive member 26 of the write head 20 after recording operation is performed from the light source 60 and via the recording medium 10. When this occurs, the residual charges on the write head 20 are disappeared in the same manner as described for the first embodiment.

Moreover, the present invention is not limited to the embodiments described above, as for example, the following modifications are possible.

(1) The recording medium 10 can be tape, sheets, disks, cards or any necessary form, and the transfer status of the recording medium can be suitably changed to rotation, conversion or the like in accordance with the form. The recording member of the recording medium 10 and the photoconductive member of the write head 20 can be brought into contact.

(2) The timing for the open operation of the optical shutter 34 and the timing of the impressing of the drive voltage by the switch 44 can be suitably set in accordance with the material and the optical characteristics of the recording medium 10, and need not coincide with each other. In addition, a suitable bias voltage can be applied prior to the impressing of the drive voltage.

(3) Furthermore, the irradiation of the light that includes the information, to the write head 20 at the time of recording operation can be performed in a plane, or by scanning light in dots or lines.

(4) In addition, in the embodiments described above, the resistor 40 is connected across the electrodes 14 and 24 to discharge of the electric charges of the capacitor but the electrodes can be shorted by a switch and the same effect obtained.

(5) In addition, the configuration of the light irradiation system can be suitably changed in accordance with necessity.

As has been described above, according to the embodiments of the present invention, light is irradiated with respect to a photoconductive member after recording operation and the residual charges on the surface and charges which remain at deep levels are disappeared so that it is possible to perform favorable successive recording operation in a short time.

**Claims**

1. An apparatus for recording information carried by an electro-magnetic radiation beam, the apparatus characterized by comprising:

   a recording unit comprising two electrodes (14 and 24), one of the electrodes being connected to the ground, a photoconductive member (26) and a recording member (16) capable of holding electric charges, the members being arranged so as to face each other between the electrodes;

   means (42 and 44) for applying a specific voltage across the electrodes;

   means (34 and 36) for directing an electro-magnetic radiation beam modulated with information to be recorded to the photoconductive member (26) under presence of the voltage to make conductivity of the photoconductive member (26) vary according to the information so that electric charges are generated in the photoconductive member (26), the electric charges causing generation of an electric field which is applied to the recording member (16), thus an electric charge image corresponding to the information being formed on the recording member (16); and

   means (48, 50 and 60) for directing an unmodulated electro-magnetic radiation beam to the photoconductive member (26) to increase the conductivity thereof so that the electric charges qenerated in the photoconductive member (26) flow to the ground via the electrode connected to the ground.

2. An apparatus according to claim 1 further comprising a resistor (40), being connected across the electrodes (14 and 24) and to the ground, after the electric charge image is formed on the recording member (16), for discharging electric charges taken in a capacitor formed across the photoconductive member (26) and the recording member (16) to the ground.

3. An apparatus for successively recording information carried by electro-magnetic radiation beams, the apparatus characterized by comprising:

   a recording unit comprising two electrodes (14 and 24), one of the electrodes being connected to the grounded, a photoconductive member (26) and a recording member (16) capable of holding electric charges, the members being arranged so as to face each other between the electrodes;

   means (42 and 44) for applying a specific voltage across the electrodes;

   means (34 and 36) for successively directing electro-magnetic radiation beams modulated with information to be recorded to the photoconductive member (26) under presence of the voltage, each of the beams making conductivity of the photoconductive member (26) vary according to the information so that electric charges are generated in the photoconductive member (26), the electric charges causing generation of an electric field which is applied to the recording member (16), thus electric charge images corresponding to the information being successively formed on the recording member (16);

   means (48, 50 and 60) for successively directing unmodulated electro-magnetic radiation beams to the photoconductive member (26) to increase the conductivity thereof so that each of the electric charges qenerated in the photoconductive member (26) flow to the ground via the electrode connected to the ground; and

   means (52) for controlling an interval between successive directing of the unmodulated electro-magnetic radiation beams to the photoconductive member (26) so that one of the unmodulated electro-magnetic radiation beams is directed to the photoconductive member (26) after one of the electric charge images is formed on the recording member (16) and before another electric charge image which follows the one formed image is formed on the recording member (16).

4. An apparatus according to claim 3 further comprising a resistor (40), being connected across the electrodes and to the ground, after one of the electric charge image is formed on the recording member (16), for discharging electric charges taken in a capacitor formed across the photoconductive member (26) and the recording member (16) to the ground.

5. A method of successively recording information carried by electro-magnetic radiation beams, the method comprising the steps of:

   providing two electrodes, one of the electrodes being connected to the ground, a photoconductive member and a recording member capable of holding electric charges;

   arranging the members so as to face each other between the electrodes;

   applying a specific voltage across the electrodes;

   directing successively electro-magnetic radiation beams modulated with information to be recorded to the photoconductive member under presence of the voltage, each of the beams making conductivity of the photoconductive member vary according to the information so that electric charges are generated in the photoconductive member, the electric charges causing generation of an electric field which is applied to the recording member, thus electric charge images corresponding to the information being successively formed on the recording member;

directing successively unmodulated electro-magnetic radiation beams to the photoconductive member to increase the conductivity thereof so that each of the electric charges generated in the photoconductive member flow to the ground via the electrode connected to the ground; and

controlling an interval between successive directing of the unmodulated electro-magnetic radiation beams to the photoconductive member so that one of the unmodulated electro-magnetic radiation beams is directed to the photoconductive member after one of the electric charge images is formed on the recording member and before another electric charge image which follows the one formed image is formed on the recording member.

6. A method according to claim 5 further comprising the step of, after one of the electric charge images is formed on the recording member, discharging electric charges taken in a capacitor formed across the photoconductive member and the recording member to the ground.

F I G . I
PRIOR ART

F I G . 2

F I G . 3